# EUROPEAN PATENT APPLICATION

(11) **EP 2 647 491 A1**
(43) Date of publication of application: **09.10.2013**
(21) Application number: 13161746.6
(22) Date of filing: 28.03.2013
(51) Int. Cl.: B29C 67/20, B29C 44/02, B29C 67/24, C08J 9/00, C08J 9/16, C08J 9/18, C08J 9/232

(54) **Process of fabricating a cast foam product, a cast foam product, and an intermediate foam product**

(30) Priority: 06.04.2012 US 201213441223
(71) Applicant: General Electric Company, Schenectady, New York 12345 (US)
(72) Inventor: Park, Junyoung, Greenville, SC South Carolina 29615 (US); Parolini, Jason Robert, Greenville, SC South Carolina 29615 (US)
(74) Representative: Szary, Anne Catherine

(57) **Abstract**

Disclosed is a process of fabricating a cast foam product, an intermediate foam product, and a cast foam product. The process includes positioning an expandable component and alloying particles within a die and injecting steam into the die and expanding the expandable component to form an expanded component. The expandable component includes one or more of polystyrene and polymethylmethacrylate. The intermediate foam product includes the alloying particles, the expandable component, and the steam. The cast foam product includes a distribution of the alloying particles and the expanded component, with the alloying particles being physically bound by the expanded component.

## Description

The present invention is directed to fabrication processes, fabricating products, and intermediate fabrication products. More specifically, the present invention is directed to casting processes, casting products, and intermediate foam products.

In the fabrication of cast iron components, conventional post inoculants are ineffective in nucleating nodules in portions of the components that are filled toward the end of the fabrication process. This is especially difficult for cast iron components having a weight greater than 3 U.S. tons. This ineffectiveness of conventional post inoculants results in undesirable graphite structures being formed and low cycle fatigue resistance being substantially reduced (for example, by ten times).

Known casting processes can also generate segregation within components. The segregation within components results in non-uniform and/or heterogeneous structures. Alloys and other portions of the components can, thus, have different concentrations within the components. The different concentrations result in inconsistent physical properties throughout different regions of the components, which can be undesirable.

A casting process, a casting product, and an intermediate foam product that do not suffer from the above drawbacks would be desirable in the art.

In an exemplary embodiment, a process of fabricating a cast foam product includes positioning an expandable component and alloying particles within a die and injecting steam into the die and expanding the expandable component to form an expanded component. The expandable component includes one or more of polystyrene and polymethylmethacrylate.

In another exemplary embodiment, an intermediate foam product includes alloying particles, an expandable component including one or more of polystyrene and polymethylmethacrylate, and steam.

In another exemplary embodiment, a cast foam product includes a distribution of alloying particles and an expanded component including one or more of polystyrene and polymethylmethacrylate. The alloying particles are physically bound by the expanded component.

Other features and advantages of the present invention will be apparent from the following more detailed description of the preferred embodiment, taken in conjunction with the accompanying drawings which illustrate, by way of example, the principles of the invention.
FIG. 1 shows a flow diagram of an exemplary process of fabricating a cast foam product according to the disclosure.
FIG. 2 shows a perspective view of a die having an expandable component and alloying particles positioned in the die according to the disclosure.
FIG. 3 shows a perspective view of an exemplary intermediate product with alloying particles, an expandable component, and steam during expansion according to the disclosure.
FIG. 4 shows a perspective view of a die having alloying particles and an expanded component according to the disclosure.
FIG. 5 shows a perspective view of a die including an exemplary cast foam product according to the disclosure.
FIG. 6 shows a perspective view of an exemplary cast foam product according to the disclosure.
FIG. 7 shows a perspective view of an exemplary cast foam product processed according to the disclosure.

Wherever possible, the same reference numbers will be used throughout the drawings to represent the same parts.

Provided is an exemplary process of fabricating a cast foam product, an intermediate foam product, and a cast foam product. Embodiments of the present disclosure improve low cycle fatigue, reduce or eliminate segregation within components, increase uniformity and/or homogeneity, increase physical properties, reduce shrinkage, permit introduction of alloying/nucleating agents later in a casting, or combinations thereof.

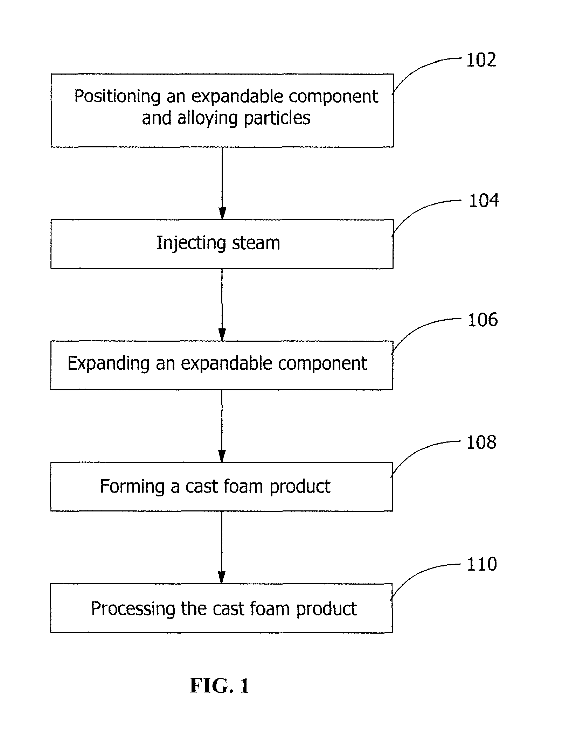

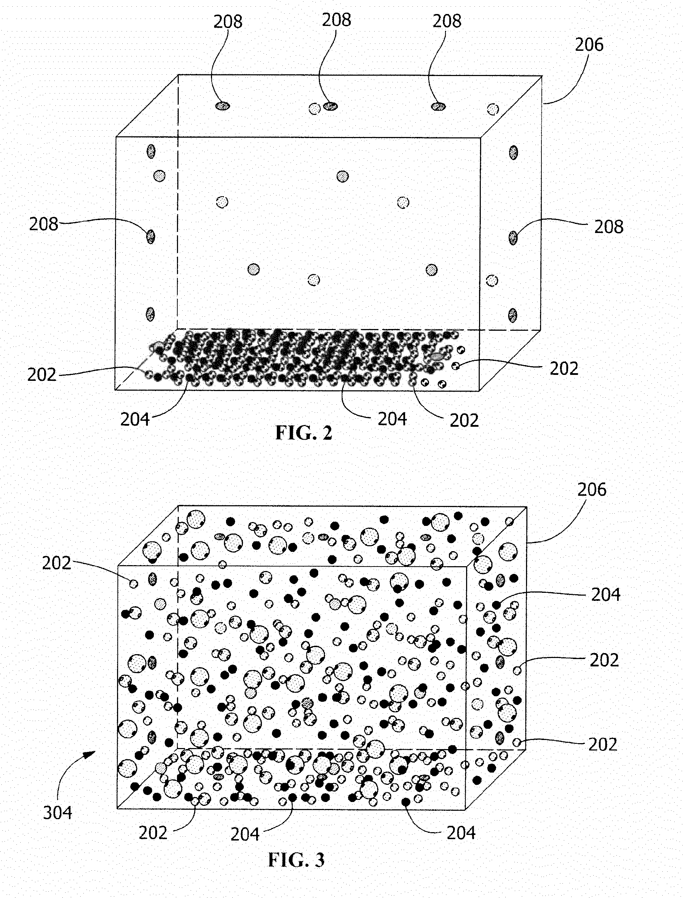

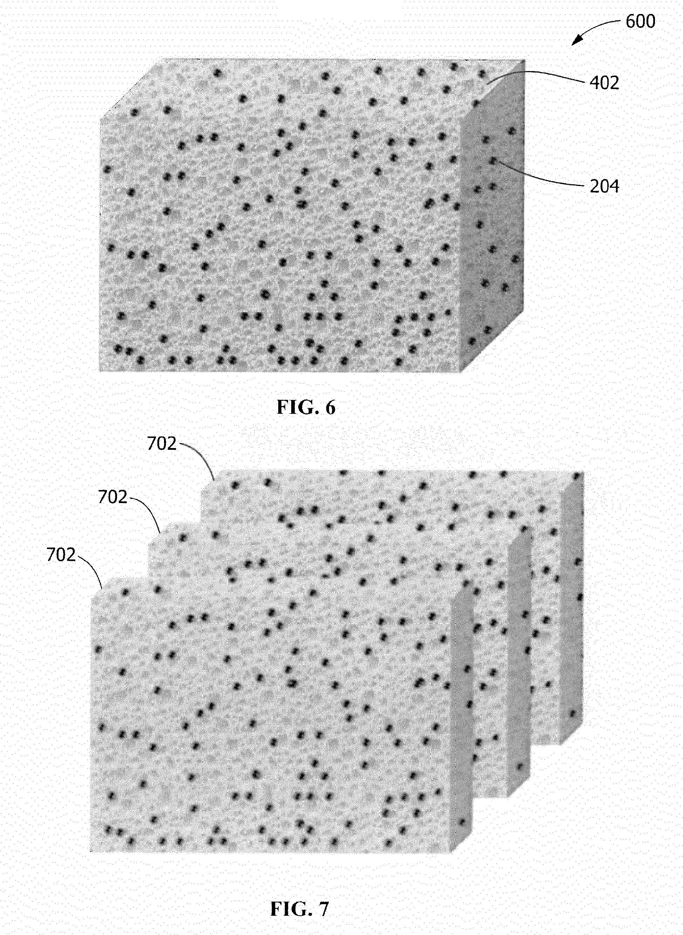

FIG. 1 shows an embodiment of a process 100 of fabricating a cast foam product 600, for example, as shown in FIG. 6. The process 100 includes positioning (step 102) an expandable component 202 and alloying particles 204 with a die 206, for example, as shown in FIG. 2. The die 206 is shown as being transparent for illustration purposes. However, as would be appreciated by those skilled in the art, the die is any suitable casting die and is opaque.

The expandable component 202 includes polystyrene and/or polymethylmethacrylate, for example, at any suitable ratio. Suitable ratios, by weight, include about 50% polystyrene and/or polymethylmethacrylate, about 70% to about 75% polystyrene, or about 70% to about 75% polymethylmethacrylate. In one embodiment, the expandable component 202 includes a greater amount of the polymethylmethacrylate than the polystyrene, for example, to provide a smoother surface finish, as is capable of being compared by any suitable test. In one embodiment, the expandable component 202 is in the form of beads during the positioning (step 102).

The process 100 further includes injecting (step 104) steam, for example, through steam intakes 208, into the die 206. Upon injecting (step 104) the steam into the steam intakes 208, an intermediate foam product 304 is formed, for example, as shown in FIG. 3. The intermediate foam product 304 includes the alloying particles 204, the expandable component 202, and the steam. At a predetermined temperature, pressure, and/or duration, the expandable component 202 within the intermediate product 304 expands (step 106), for example, as shown in FIGS. 3-4, with the expandable component 202 becoming an expanded component 402. In one embodiment, adjusting the rate of the injecting (step 104) of the steam through the steam intakes 208 and/or the rate of the expanding (step 106) of the expandable component 202 adjusts density in the cast foam product 600. In one embodiment, the density is about 1.1 pounds per cubic foot (pcf) to about 1.4 pcf, for example, from a polystyrene-polymethylmethacrylate copolymer, or about 1.3 pcf to about 1.6 pcf, for example, from polystyrene.

In one embodiment, the expanding (step 106) of the expandable component 202 distributes the alloying particles 204 within the die 206. In one embodiment, the distribution of the alloying particles 204 is substantially homogenous. For example, in one embodiment, the expandable component 206 expands (step 106) simultaneously with the alloying particles 204 being distributed. In one embodiment, the expanding (step 106) of the expandable component 202 fuses the alloying particles 204 to the expandable component 202. In one embodiment, the alloying particles 204 are nucleating agents. In one embodiment, adjusting the size of the alloying particles 204 adjusts grain size in the cast foam product 600 and/or segregation levels.

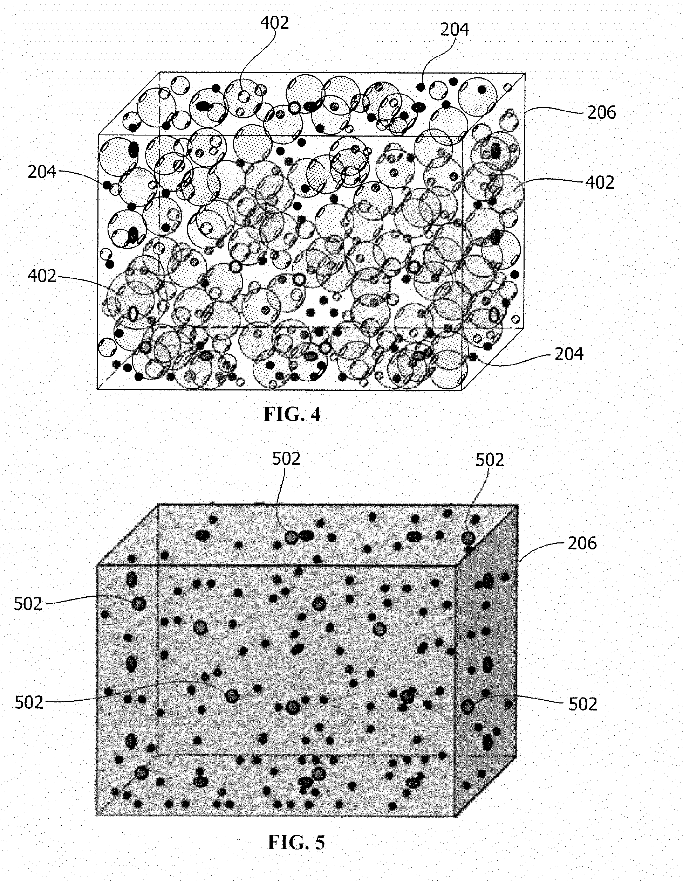

Referring to FIG. 5, the steam is substantially exhausted from the die 206 through steam exhausts 502. In one embodiment, the cast foam product 600 is then formed (step 108). In one embodiment, emissions of the process 100 are limited to the steam exhausted from the die 206 through the steam exhausts 502.

Referring to FIGS. 5-6, in one embodiment, the cast foam product 600 is then removed (step 110) from the die 206. The cast foam product 600 includes a distribution of the alloying particles 204 and the expanded component 402, with the alloying particles 204 being physically bound by the expanded component 402. In one embodiment, the cast foam product 600 is resistant to shrinkage, for example, shrinking about 0.2% to about 0.5% at about 23°C over a period of one month for polystyrene, or less than about 0.1% at about 23°C over a period of one month for polystyrene-polymethylmethacrylate copolymers. In one embodiment, the intermediate product 304 and/or the cast foam product 600 are devoid of segregation of the alloying particles 204. In one embodiment, the cast foam product 600 is net-shaped upon being removed (step 110).

Referring to FIGS 6-7, in one embodiment, the cast foam product 600 is then processed (step 110). Processing (step 112) includes slicing, assembling, adhesively securing sliced portions 702 together, machining, coating, molding, pouring, or combinations thereof.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A process of fabricating a cast foam product, the process comprising:
positioning an expandable component and alloying particles within a die; and
injecting steam into the die and expanding the expandable component to form an expanded component;
wherein the expandable component includes one or more of polystyrene and polymethylmethacrylate.

2. The process of claim 1, wherein the expanding of the expandable component fuses the alloying particles to the expanded component.

3. The process of claim 1 or claim 2, wherein the expanding of the expandable component distributes the alloying particles within the die.

4. The process of claim 3, wherein the distribution of the alloying particles is substantially homogenous.

5. The process of any preceding claim, wherein the expandable component includes polystyrene and the polymethylmethacrylate and wherein the expandable component includes a greater amount of the polymethylmethacrylate than the polystyrene.

6. The process of any preceding claim, wherein the expandable component includes beads of one or more of the polystyrene and the polymethylmethacrylate.

7. The process of any preceding claim, further comprising removing the foam product from the die.

8. The process of any preceding claim, further comprising processing the foam product.

9. The process of any preceding claim, further comprising dividing the cast foam product into slices and adhesively securing the sliced portions together.

10. The process of any preceding claim, wherein the alloying particles are nucleating agents.

11. The process of any preceding claim, wherein adjusting the rate of the expanding of the expandable component adjusts density of the cast foam product.

12. The process of any preceding claim, wherein adjusting the rate of the injecting of the steam adjusts density in the cast foam product.

13. The process of any preceding claim, wherein adjusting the size of the alloying particles adjusts grain size in the cast foam product, segregations levels within the cast foam product, or a combination thereof.

14. An intermediate foam product, comprising:
alloying particles;
an expandable component including one or more of polystyrene and polymethylmethacrylate; and
steam.

15. A cast foam product, comprising:
a distribution of alloying particles; and
an expanded component including one or more of polystyrene and polymethylmethacrylate;
wherein the alloying particles are physically bound by the expanded component.
